# EUROPEAN PATENT APPLICATION

(11) **EP 3 147 657 A1**
(43) Date of publication of application: **29.03.2017**
(21) Application number: 15796328.1
(22) Date of filing: 18.05.2015
(51) Int. Cl.: G01N 27/26

(54) **ELECTROCHEMICAL SENSITIVE TEST PIECE AND MANUFACTURING METHOD THEREFOR**

(30) Priority: 20.05.2014 CN 201410213510
(71) Applicant: Kuang Hong Precision Co., Ltd., Taoyuan Hsien (TW)
(72) Inventor: CHIANG, Cheng-feng, Taoyuan Hsien (TW); CHIANG, Jung-chuan, Taoyuan Hsien (TW); CHIANG, Wen-te, Taoyuan Hsien (TW); CHIANG, Chien-ying, Taoyuan Hsien (TW); CHIANG, Chien-yi, Taoyuan Hsien (TW)
(74) Representative: Cabinet Chaillot
(86) International application number: PCT/CN2015/079158
(87) International publication number: WO 2015/176628

(57) **Abstract**

An electrochemical sensitive test piece and a manufacturing method therefor. The electrochemical sensitive test piece contains a substrate, wherein the substrate is made of polymer plastics not capable of surface metallization, an inspection groove is further concavely provided at one side of the front surface of the substrate; a conductive electrode part, wherein the conductive electrode part is a conductive article provided on the substrate, and a part of the conductive electrode part extends into the test groove; an electrochemical sensing part, wherein the electrochemical sensing part is a chemical sensing layer correspondingly provided in the test groove, and is in contact with a liquid specimen to be detected and then generates a chemica reaction to generate an electric signal; and cover plate, wherein the cover plate is a thin plate sheet and covers the substrate corresponding to the test groove, such that a detection opening is formed at the outer side edge of the test groove, the liquid specimen to be detected is dripped in from the detection opening, and the cover plate at least covers the junction of the conductive electrode part and the electrochemical sensing part; and a part of the conductive electrode part extends out from the cover plate and is not sheltered by the cover plate. The electrochemical sensitive test piece has the advantages of simple manufacture and a high accuracy.

## Description

### BACKGROUND OF THE INVENTION

### 1. Field of the Invention

The present disclosure relates to an electrochemical sensitive test piece and manufacturing method, in particular, to a structure of a disposable test strip and manufacturing method thereof.

### 2. Description of the Related Art

As the improvement of medical science and manufacturing process of the related equipment, a disposable test strip which has a metal electrode and is adapted for inspecting liquid sample, such as blood, to further inspect concentration of the blood sugar, uric acid, cholesterol in the blood or concentration of the heavy metal and insecticide in sewage, is well developed and widely applied, and becomes an importance testing tool.

The electrochemical testing principle is widely applied to test various liquid samples. However, as disclosed in Taiwan issue no. I245119, which is titled as "structure of electrochemical sensitive test piece and manufacturing process thereof", the main body has a through hole, and at least one physical electrode is embedded into the main body and fixed in the through hole, so that the structure of combining multiple layers can be avoided, and the testing function can be improved.

However, the manufacturing process for product is not easy actually, and has the problem of complex and requiring multiple processes to finish the product. Moreover, these processes only can be finished by the apparatuses with high precision, and it causes the increasing of the manufacturing cost. Therefore, it is not easy to lower the price of the product and widely applied.

In addition, it is also not easy to recover the used disposable test strip manufactured by embedding the conductive pin. The embedded conductive pin must be taken out first for recovering the material, and it is a defect for further wide application.

What is need is an electrochemical sensitive test piece and manufacturing method to solve the above-mentioned problems.

### SUMMARY OF THE INVENTION

The present disclosure illustrates an electrochemical sensitive test piece and manufacturing method thereof to solve the above-mentioned problems.

To achieve above-mentioned objective, the present disclosure provides an electrochemical sensitive test piece comprising: a baseboard, made of polymer plastic which is hard to be surface metallized, the baseboard having at least one inspection portion recessed from a side of a front thereof; at least one electrically conductive electrode portion, being an electrically conductive object disposed on the baseboard, a part of the at least one electrically conductive electrode portion extending into the inspection portion; at least one electrochemical sensing portion, being a chemical sensing layer disposed in the inspection portion, the at least one electrochemical sensing portion producing a chemical reaction to generate an electrical signal after contacting a liquid sample to be tested; and a cover, being a thin plate which covers on the baseboard and on the inspection portion correspondingly, whereby a test opening is formed on an outside end of the inspection portion and the liquid sample to be tested is dropped in the inspection portion via the test opening, the cover sheltering a junction portion between the electrically conductive electrode portion and the electrochemical sensing portion. Part of the electrically conductive electrode portion is extended to outside of the cover and not being sheltered by the cover.

Preferably, the baseboard has at least one through hole disposed close to an inner side of the inspection portion, and the number of the at least one through hole corresponds to the electrically conductive electrode portion, and the electrically conductive electrode portion extends to outside of the cover and the part which is not sheltered by the cover penetrates the through hole and extends to a surface of a back side of the baseboard.

In addition, the present disclosure further illustrates a method of manufacturing an electrochemical sensitive test piece, the method comprises the following steps: A. dual material forming step is executed to inject a polymer plastic which is hard to be surface metallized, the baseboard having at least one inspection portion recessed from a side of a front thereof, and to inject a polymer plastic capable of being surface metallized on the baseboard to form at least one electrically conductive electrode portion, a part extending to the inspection portion; B. surface metallization step is executed to perform a surface metallization on the electrically conductive electrode portion to be conductive; C. electric reaction layer coating step is executed to coat, drop or disperse the chemical reagent in the inspection portion to form an electrochemical sensing portion which can generate electrical signal after contacting with the liquid sample to be tested; D. electric reaction layer drying step is executed to actively dry the electrochemical sensing portion or passive wait the electrochemical sensing portion to dry; E. reaction slot sheltering step is executed to cover a cover on the baseboard corresponding to the inspection portion, whereby a test opening is formed on an outside end of the inspection portion and the liquid sample to be tested can be dropped in the inspection portion via test opening. A part of the electrically conductive electrode portion extends to outside of the cover and not being sheltered by the cover.

In addition, the present disclosure further illustrates a method of manufacturing an electrochemical sensitive test piece, the method comprises the following steps: A. a double injection molding step is executed to inject a polymer plastic capable of being surface metallized to form at least one electrically conductive electrode portion first, and then add catalyst on the electrically conductive electrode portion, and inject a polymer plastic which is hard to be surface metallized on lower side of the electrically conductive electrode portion to form a substrate, the substrate further having at least one inspection portion recessed from a side of a front surface thereof, a part of the electrically conductive electrode portion being extended into the inspection portion; B. a surface metallization step is executed to perform a surface metallization on the electrically conductive electrode portion to be conductive; C. an electric reaction layer coating step is executed to coat, drop or disperse the chemical test sample in the inspection portion to form an electrochemical sensing portion which can generate an electrical signal after contacting with the liquid sample to be tested; D. an electric reaction layer drying step is executed to actively dry the electrochemical sensing portion or passively wait the electrochemical sensing portion for drying; and E. a reaction slot sheltering step is executed to cover a cover on the baseboard corresponding to the inspection portion, to form a test opening on an outside end of the inspection portion, the liquid sample to be tested dropped in the inspection portion via the test opening. A part of the electrically conductive electrode portion is extended to outside of the cover and not being sheltered by the cover.

According to the electrochemical sensitive test piece and manufacturing method thereof, the manufacturing process of the electrochemical sensitive test piece is not complex and has more precision and convenience, so the manufacturing cost can be reduced efficiently. In addition, the present disclosure does not need to embed a conductive body therein, and the material of the present disclosure can be recovered by dissolving the metal formed by the surface metallization, so the present disclosure can be widely applied.

### BRIEF DESCRIPTION OF THE DRAWINGS

The detailed structure, operating principle and effects of the present disclosure will now be described in more details hereinafter with reference to the accompanying drawings that show various embodiments of the present disclosure as follows.
FIG. 1 is an appearance view of an electrochemical sensitive test piece of the present disclosure.
FIG. 2 is a decomposition view of the electrochemical sensitive test piece of the present disclosure.
FIG. 3 is an appearance view of back side of the electrochemical sensitive test piece of the present disclosure.
FIG. 4 is a flow diagram of a manufacturing method of the electrochemical sensitive test piece of the present disclosure.
FIG. 5 is a flow diagram of exemplary embodiment of the manufacturing method of the electrochemical sensitive test piece of the present disclosure.
FIG. 6 is a flow diagram of exemplary embodiment of the manufacturing method of the electrochemical sensitive test piece of the present disclosure.
FIG. 7 is a flow diagram of exemplary embodiment of the manufacturing method of the electrochemical sensitive test piece of the present disclosure.
FIG. 8 is a flow diagram of exemplary embodiment of the manufacturing method of the electrochemical sensitive test piece of the present disclosure.
FIG. 9 is a flow diagram of exemplary embodiment of the manufacturing method of the electrochemical sensitive test piece of the present disclosure.
FIG. 10 is a flow diagram of a manufacturing method of the electrochemical sensitive test piece of the present disclosure.
FIG. 11 is a flow diagram of exemplary embodiment of the manufacturing method of the electrochemical sensitive test piece of the present disclosure.
FIG. 12 is a flow diagram of exemplary embodiment of the manufacturing method of the electrochemical sensitive test piece of the present disclosure.

### DETAILED DESCRIPTION OF THE PREFERRED EMBODIMENTS

Reference will now be made in detail to the exemplary embodiments of the present disclosure, examples of which are illustrated in the accompanying drawings. Therefore, it is to be understood that the foregoing is illustrative of exemplary embodiments and is not to be construed as limited to the specific embodiments disclosed, and that modifications to the disclosed exemplary embodiments, as well as other exemplary embodiments, are intended to be included within the scope of the appended claims. These embodiments are provided so that this disclosure will be thorough and complete, and will fully convey the inventive concept to those skilled in the art. The relative proportions and ratios of elements in the drawings may be exaggerated or diminished in size for the sake of clarity and convenience in the drawings, and such arbitrary proportions are only illustrative and not limiting in any way. The same reference numbers are used in the drawings and the description to refer to the same or like parts.

It will be understood that, although the terms 'first', 'second', 'third', etc., may be used herein to describe various elements, these elements should not be limited by these terms. The terms are used only for the purpose of distinguishing one component from another component. Thus, a first element discussed below could be termed a second element without departing from the teachings of embodiments. As used herein, the term "or" includes any and all combinations of one or more of the associated listed items.

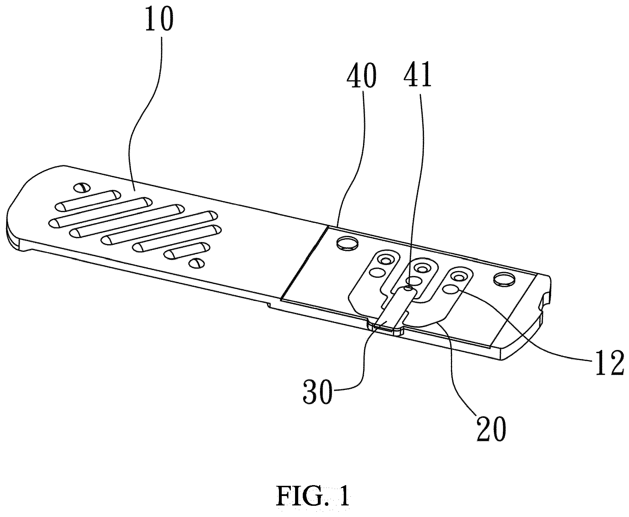

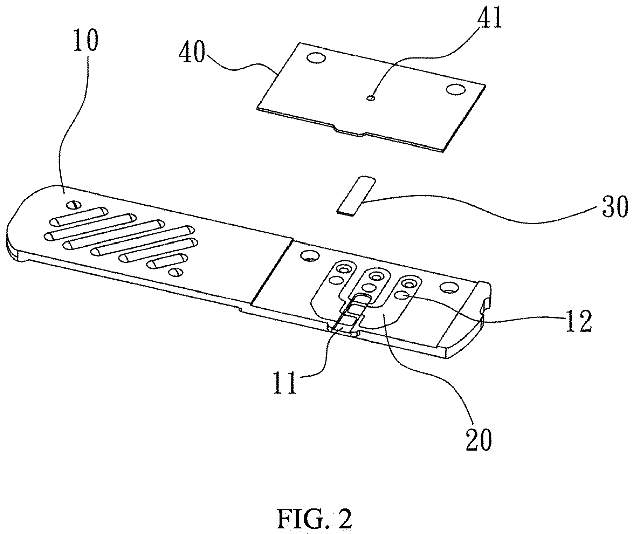

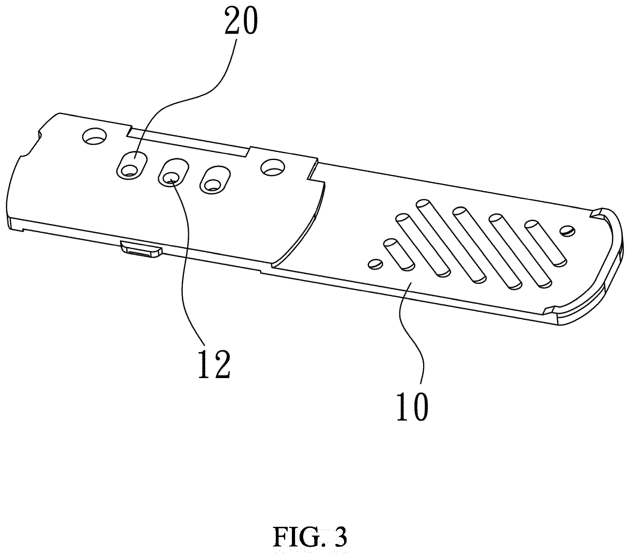

Please refer to FIG. 1, FIG. 2 and FIG. 3, the present disclosure provides an electrochemical sensitive test piece and manufacturing method thereof. The electrochemical sensitive test piece comprises a baseboard 10, at least one electrically conductive electrode portion 20, at least one electrochemical sensing portion 30 and a cover 40.

The baseboard 10 can be a rectangular plate which is made of a polymer plastic hard to be surface metallized. The surface metallization is an operation for electroplating or electroless plating on the surface to form a metal layer, such as PC which is a polymer plastic material without mixing catalyst in advance. The baseboard 10 has at least one inspection portion 11 at the front. The inspection portion 11 can be a structure of long straight groove portion. The baseboard 10 has at least one through hole 12 near the inner side of the inspection portion 11. The through hole 12 is a circular hole.

The electrically conductive electrode portion 20 is electrically conductive object corresponding to the baseboard 10, and its number corresponds to the through hole 12. A part of the electrically conductive electrode portion 20 is extended into the inspection portion 11, and the other part penetrates the through hole 12 to extend to backside of the baseboard 10, for receiving the electrical signal.

The electrochemical sensing portion 30 is a chemical sensing layer disposed in the inspection portion 11, the at least one electrochemical sensing portion produces a chemical reaction to generate an electrical signal after contacting with the liquid sample to be tested. The electrochemical sensing portion 30 further comprises a hydrophilic layer, a biochemical reaction layer, or a hydrophilic biochemical reaction layer.

The cover 40 is a thin plate which covers on the baseboard 10 and on the inspection portion 11 correspondingly, whereby a test opening is formed on an outside end of the inspection portion 11 and the liquid sample to be tested is dropped in the inspection portion via the test opening. The cover at least shelters a junction portion between the electrically conductive electrode portion 20 and the electrochemical sensing portion 30. The cover 40 or a portion of the baseboard 10 covered by the cover 40 has at least one hole 41. In order to convenience, the cover 40 can be printed with assistance object, such as window and indication mark.

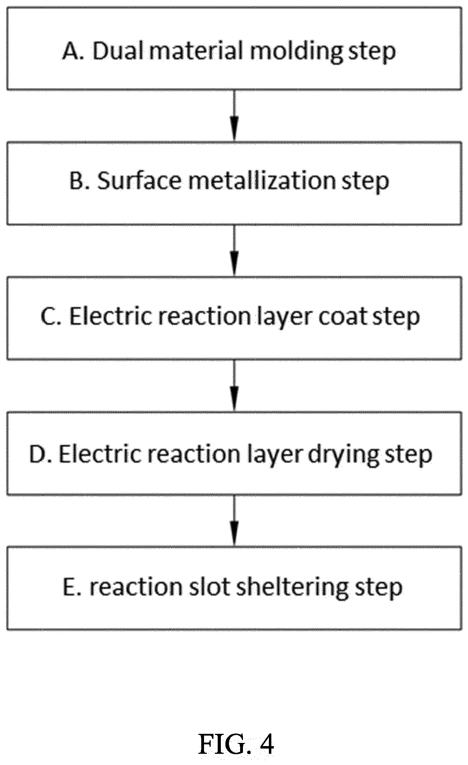

Please refer to FIG. 4. The present disclosure further illustrates a method of manufacturing the electrochemical sensitive test piece. The manufacturing method for the electrochemical sensitive test piece is used to manufacture the above-mentioned electrochemical sensitive test piece, and the preferred embodiment comprises the following steps.

A. dual material molding step; B. surface metallization step; C. electric reaction layer coating step; D. electric reaction layer drying step; E. reaction slot sheltering step.

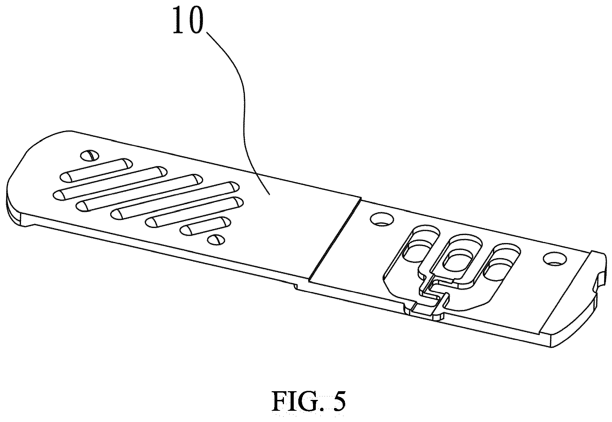

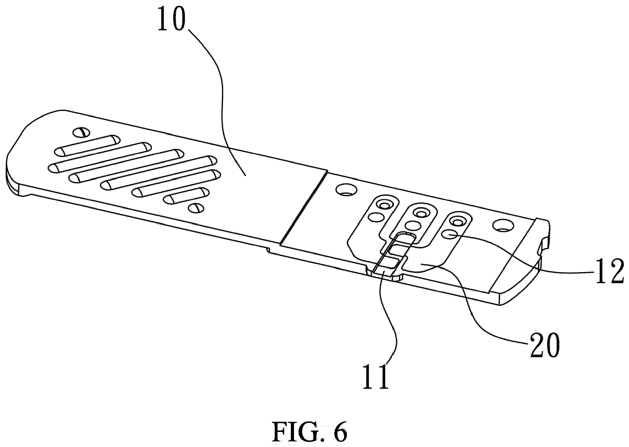

In dual material molding step A, in the same model, the polymer plastic hard to be surface metallized, such as PC, is injected to form the baseboard 10, as shown in FIG. 5, and a polymer plastic capable of being surface metallized, such as ABS, is then injected on the baseboard 10 to form the electrically conductive electrode portion 20, as shown in FIG. 6.

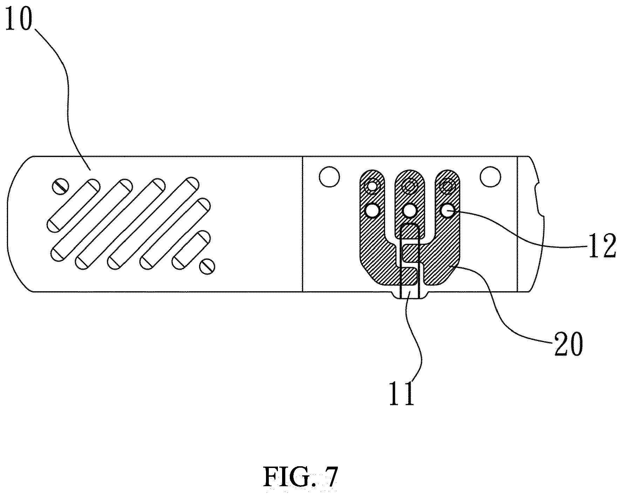

Please refer to FIG. 7, in surface metallization step B, the electrically conductive electrode portion 20 is performed the surface metallization, the metal formed in this step is Cu, Ni, Ag, Au, Sn, Ti, Pt, Pd, Rh, Ru, Ir, Cr, Fe, Al, or the combination thereof.

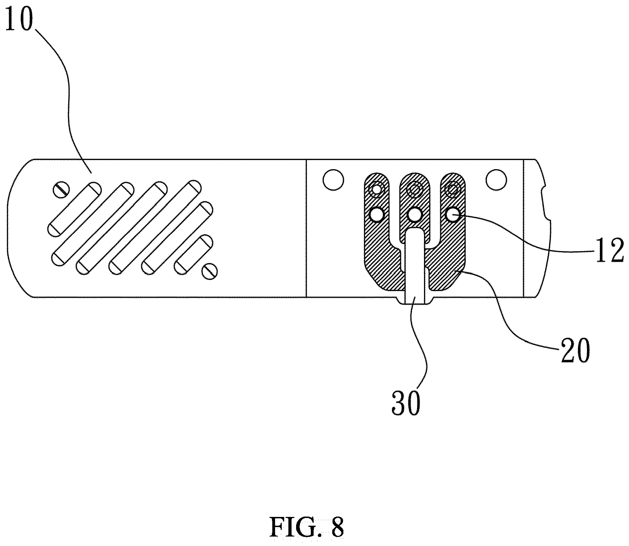

Please refer to FIG. 8, in the electric reaction layer coating step C, the chemical reagent is coated, dropped or dispersed in the inspection portion 11 to form the electrochemical sensing portion 30. The electrochemical sensing portion 30 can further comprise a hydrophilic layer, a biochemical reaction layer, or a hydrophilic biochemical reaction layer.

In the electric reaction layer drying step D, the electrochemical sensing portion 30 is dried by an active way, or by waiting passively.

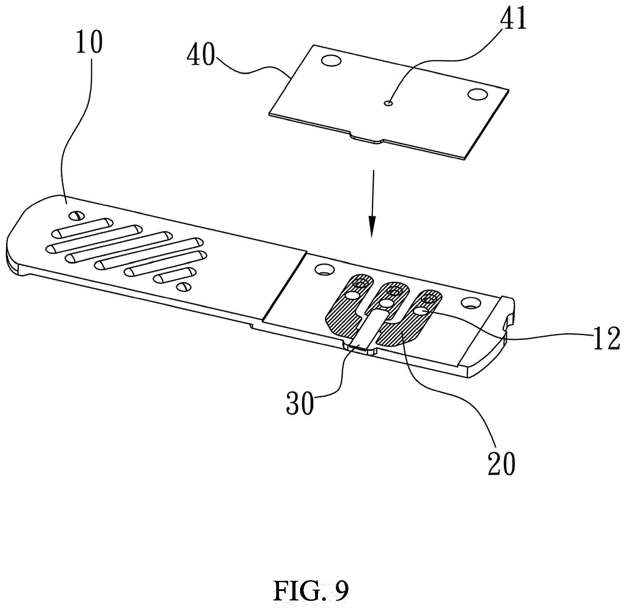

Please refer to FIG. 9. In the reaction slot sheltering step E, the cover 40 is covered on the inspection portion 11 and on the substrate 10 correspondingly, whereby a test opening is formed at an outside end of the inspection portion 11, and the liquid sample to be tested can be dropped via the test opening. The cover 40 at least shelters the junction portion between the electrically conductive electrode portion 20 and the electrochemical sensing portion 30.

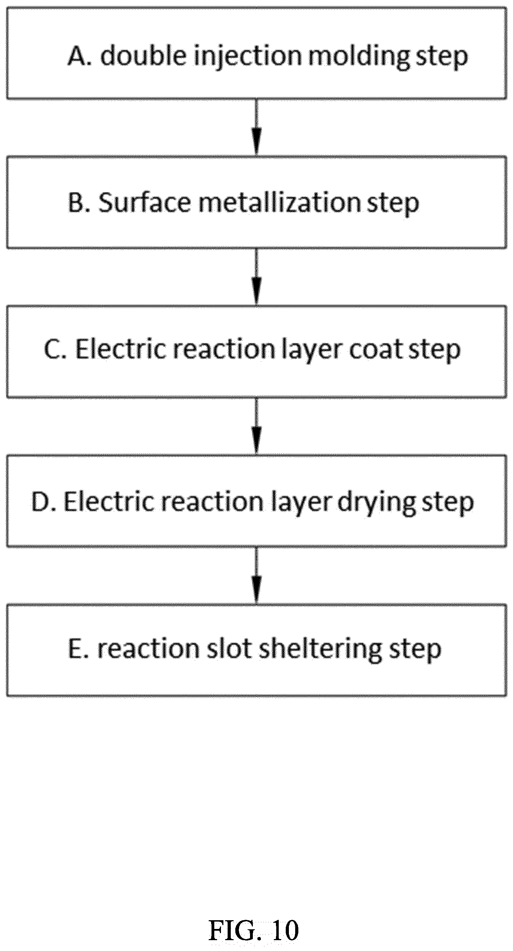

Please refer to FIG. 10, a manufacturing method for another electrochemical sensitive test piece of the present disclosure is disclosed. The manufacturing method for the electrochemical sensitive test piece is adapted for manufacturing the above-mentioned electrochemical sensitive test piece. The preferred embodiment comprises the following steps.

A. double injection molding step; B. Surface metallization step; C. Electric reaction layer coating step; D. Electric reaction layer drying step; E. Reaction slot sheltering step.

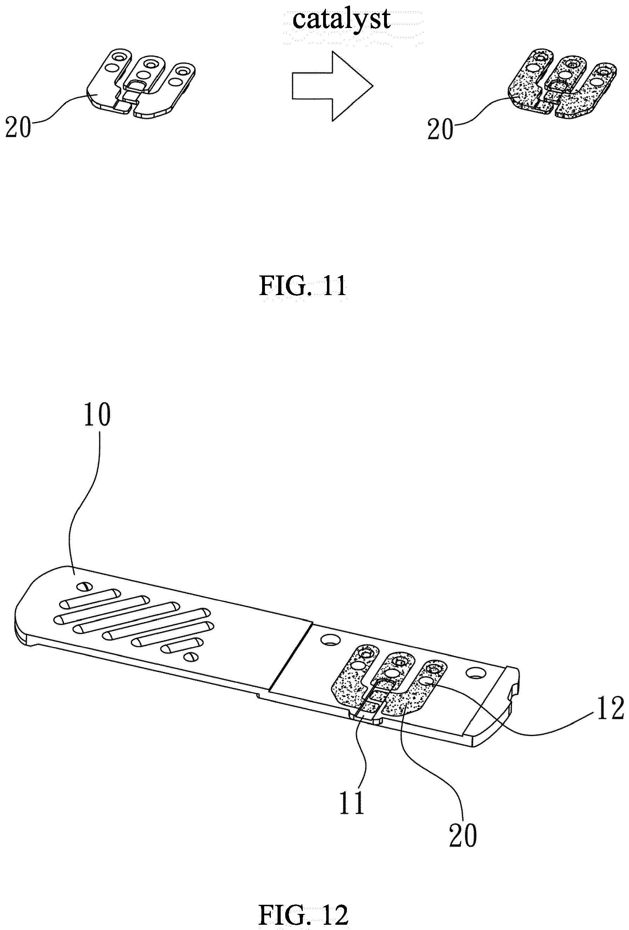

Please refer to FIG. 11, the double injection molding step A is executed to inject a polymer plastic capable of being surface metallized, such as ABS, to form the electrically conductive electrode portion 20 first, and then add catalyst on the electrically conductive electrode portion 20. Next, please refer to FIG. 12, the polymer plastic which is hard to be surface metallized, such as PC, is injected to form the lower side of the substrate 10 below the electrically conductive electrode portion 20.

Please refer to FIG. 7, the surface metallization step B is executed to surface metallize the electrically conductive electrode portion 20. The metal formed in this step is Cu, Ni, Ag, Au, Sn, Ti, Pt, Pd, Rh, Ru, Ir, Cr, Fe, or Al or combination thereof.

Please refer to FIG. 8, in the electric reaction layer coating step C, the chemical reagent is coated, dropped or dispersed in the inspection portion 11 to form the electrochemical sensing portion 30. The electrochemical sensing portion 30 can further comprise a hydrophilic layer, a biochemical reaction layer, or a hydrophilic biochemical reaction layer.

In the electric reaction layer drying step D, the electrochemical sensing portion (30) is dried by an active way, or by waiting passively.

Please refer to FIG. 9, in the reaction slot sheltering step E, the cover 40 is covered on the inspection portion 11 and on the substrate 10 correspondingly, whereby a test opening is formed at an outside end of the inspection portion 11, and the liquid sample to be tested can be dropped via the test opening. The cover 40 at least shelters the junction portion between the electrically conductive electrode portion 20 and the electrochemical sensing portion 30.

According to the electrochemical sensitive test piece and manufacturing method thereof, the manufacturing process of the electrochemical sensitive test piece is not complex and has more precision and convenience, so that the manufacturing cost can be reduced efficiently. In addition, the present disclosure does not need to embed a conductive body therein, and the material of the present disclosure can be recovered by dissolving the metal formed by the surface metallization, so the present disclosure has high convenience for application.

The above-mentioned descriptions represent merely the exemplary embodiment of the present disclosure, without any intention to limit the scope of the present disclosure thereto. Various equivalent changes, alternations or modifications based on the claims of present disclosure are all consequently viewed as being embraced by the scope of the present disclosure.

## Claims

1. An electrochemical sensitive test piece, comprising:
a baseboard, made of polymer plastic which is hard to be surface metallized, the baseboard having at least one inspection portion recessed from a side of a front thereof;
at least one electrically conductive electrode portion, being an electrically conductive object disposed on the baseboard, a part of the at least one electrically conductive electrode portion extending into the inspection portion;
at least one electrochemical sensing portion, being a chemical sensing layer disposed in the inspection portion, the at least one electrochemical sensing portion producing a chemical reaction to generate an electrical signal after contacting a liquid sample to be tested; and
a cover, being a thin plate which covers on the baseboard and on the inspection portion correspondingly, whereby a test opening is formed on an outside end of the inspection portion and the liquid sample to be tested is dropped in the inspection portion via the test opening, the cover sheltering a junction portion between the electrically conductive electrode portion and the electrochemical sensing portion;
wherein a part of the electrically conductive electrode portion extends to outside of the cover and not being sheltered by the cover.

2. The electrochemical sensitive test piece as defined in claim 1, wherein the baseboard has at least one through hole disposed close to an inner side of the inspection portion, and the number of the at least one through hole corresponds to the electrically conductive electrode portion, and the electrically conductive electrode portion extends to outside of the cover and the part which is not sheltered by the cover penetrates the through hole and extends to a surface of a back side of the baseboard.

3. The electrochemical sensitive test piece as defined in claim 2, wherein the through hole is a circular hole.

4. The electrochemical sensitive test piece as defined in claim 1, wherein the baseboard comprises the polymer plastic without mixing catalyst in advance.

5. The electrochemical sensitive test piece as defined in claim 1, wherein the baseboard is a rectangular plate.

6. The electrochemical sensitive test piece as defined in claim 1, wherein the inspection portion is a structure of long straight groove.

7. The electrochemical sensitive test piece as defined in claim 1, wherein the electrochemical sensing portion further comprises a hydrophilic layer, a biochemical reaction layer, or a hydrophilic biochemical reaction layer.

8. The electrochemical sensitive test piece as defined in claim 1, wherein the cover is transparent.

9. The electrochemical sensitive test piece as defined in claim 1, wherein the cover or a portion of the baseboard being covered by the cover has at least one hole.

10. The electrochemical sensitive test piece as defined in claim 1, wherein the electrically conductive electrode portion is a polymer plastic having a surface with a conductive metal layer by electroplating or electroless plating, and the polymer plastic comprises a polymer plastic without mixing catalyst in advance, and a polymer plastic with mixing catalyst in advance.

11. A method of manufacturing an electrochemical sensitive test piece, comprising:
A. executing a dual material molding step, to inject a polymer plastic which is hard to be surface metallized, the baseboard having at least one inspection portion recessed from a side of a front surface thereof, and inject a polymer plastic capable of being surface metallized on the baseboard to form at least one electrically conductive electrode portion, a part of the at least one electrically conductive electrode portion being extended to the inspection portion;
B. executing a surface metallization step, to perform a surface metallization on the electrically conductive electrode portion to be conductive;
C. executing an electric reaction layer coating step, to coat, drop or disperse the chemical test sample in the inspection portion to form an electrochemical sensing portion which can generate an electrical signal after contacting with the liquid sample to be tested;
D. executing an electric reaction layer drying step to actively dry the electrochemical sensing portion or passively wait the electrochemical sensing portion for drying; and
E. executing a reaction slot sheltering step to cover a cover on the baseboard corresponding to the inspection portion, to form a test opening on an outside end of the inspection portion, the liquid sample to be tested dropped in the inspection portion via the test opening;
wherein a part of the electrically conductive electrode portion is extended to outside of the cover and not sheltered by the cover.

12. The manufacturing method as defined in claim 11, wherein the polymer plastic which is hard to be surface metallized is a polymer plastic without mixing catalyst in advance.

13. The manufacturing method as defined in claim 11, wherein the polymer plastic capable of being surface metallized comprises the polymer plastic without mixing catalyst in advance and the polymer plastic mixing with catalyst in advance.

14. The manufacturing method as defined in claim 11, wherein the metal formed in the step B is Cu, Ni, Ag, Au, Sn, Ti, Pt, Pd, Rh, Ru, Ir, Cr, Fe, or Al or the combination thereof.

15. The manufacturing method as defined in claim 11, wherein the electrochemical sensing portion further comprises a hydrophilic layer, a biochemical reaction layer, or a hydrophilic biochemical reaction layer.

16. A method of manufacturing an electrochemical sensitive test piece, comprising:
A. executing a double injection molding step, to inject a polymer plastic capable of being surface metallized to form at least one electrically conductive electrode portion first, and then add catalyst on the electrically conductive electrode portion, and inject a polymer plastic which is hard to be surface metallized on lower side of the electrically conductive electrode portion to form a substrate, the substrate further having at least one inspection portion recessed from a side of a front surface thereof, a part of the electrically conductive electrode portion being extended into the inspection portion;
B. executing a surface metallization step, to perform a surface metallization on the electrically conductive electrode portion to be conductive;
C. executing an electric reaction layer coating step, to coat, drop or disperse the chemical test sample in the inspection portion to form an electrochemical sensing portion which can generate an electrical signal after contacting with the liquid sample to be tested;
D. executing an electric reaction layer drying step to actively dry the electrochemical sensing portion or passively wait the electrochemical sensing portion for drying; and
E. executing a reaction slot sheltering step to cover a cover on the baseboard corresponding to the inspection portion, to form a test opening on an outside end of the inspection portion, the liquid sample to be tested dropped in the inspection portion via the test opening; and
wherein a part of the electrically conductive electrode portion is extended to outside of the cover and not sheltered by the cover.

17. The manufacturing method as defined in claim 16, wherein the polymer plastic which is hard to be surface metallized is a polymer plastic without mixing catalyst in advance..

18. The manufacturing method as defined in claim 16, wherein the polymer plastic capable of being surface metallized comprises the polymer plastic without mixing catalyst in advance and the polymer plastic mixing with catalyst in advance.

19. The manufacturing method as defined in claim 16, wherein the metal formed in the step B is Cu, Ni, Ag, Au, Sn, Ti, Pt, Pd, Rh, Ru, Ir, Cr, Fe, or Al or the combination thereof.

20. The manufacturing method as defined in claim 16, wherein the electrochemical sensing portion further comprises a hydrophilic layer, a biochemical reaction layer, or a hydrophilic biochemical reaction layer.
